# EUROPEAN PATENT SPECIFICATION

(11) **EP 1 108 657 B1**
(45) Date of publication and mention of the grant of the patent: **28.02.2007**
(21) Application number: 00311167.1
(22) Date of filing: 14.12.2000
(51) Int. Cl.: B65D 88/74, F25B 30/04, C09K 5/00

(54) **Heating of refrigerated goods container**
Heizung eines Behälters mit gekühlten Waren
Chauffage d'un conteneur avec des produits réfrigérés

(30) Priority: 15.12.1999 GB 9929692
(43) Date of publication of application: 20.06.2001
(73) Proprietor: The BOC Group plc, Windlesham Surrey GU20 6HJ (GB)
(72) Inventor: Garrett, Michael Ernest, Woking, Surrey GU22 7XR (GB); Heywood, Michael John, Hythe, Kent CT21 5QN (GB)
(74) Representative: Wickham, Michael

(56) References cited:
- EP-A- 0 060 724
- US-A- 4 433 554
- US-A- 4 606 195
- US-A- 5 337 579

## Description

This invention relates to the refrigeration of goods, particularly but not exclusively to the refrigeration of goods in transit, and to an apparatus for heating a refrigerated container for transporting goods.

Refrigeration systems for transporting and/or storing perishable food stuffs and the like are well known and often comprise insulated liquid cryogen storage tanks capable of holding liquid cryogen at several atmospheres pressure, a distribution system being provided which utilises the pressure within the storage tank to generate a spray of cryogen within a container to reduce the temperature within the container, and that of any perishable goods therein. These systems are common in vehicular refrigerated trailers, or "reefers", either instead of or in combination with a mechanical refrigeration unit. Such systems are often complemented by heating systems, which are required in order to maintain the correct temperature conditions within the container for produce during transit/storage.

The provision of heat for refrigerated containers is conventionally achieved by means of diesel burners or catalytic gas burners, but these are comparatively crude, insufficiently responsive to changing temperature conditions within the container and slow to react. In addition, conventional heating systems often require an electrical power source, which renders such systems unsuitable for application with standard transportable containers which are frequently loaded onto and off loaded from vehicles and ships.

EP-A-60 724 discloses a refrigerated cargo container. A mechanical refrigeration plant has temperature sensors to detect the temperature in the container. In one mode of operation the control system diverts compressed refrigerant vapour directly into the evaporator of the refrigerant plant if the sensed temperature is too high.

According to the present invention there is provided apparatus for heating a refrigerated container comprising a source of a compressed gas, a vessel in thermal communication with the interior of the container, and control means to allow gas to flow from the source to the vessel when heating of the container is desired, characterised in that the vessel contains an adsorbent material to adsorb exothermically the flow of gas.

Such an arrangement is simple and inexpensive to manufacture and in operation, requires no external power source in order to provide heat to a refrigerated container. The apparatus utilises the exothermic nature of the adsorption reaction in order to provide the necessary heat; the apparatus is also advantageous in that it can very easily be used to supplement the main refrigeration system, so as to provide extra refrigeration if required. This can be achieved by utilising the endothermic effect of desorption; on venting the vessel (either internally or externally of the container) adsorbed gas is desorbed in an endothermic reaction, such that the temperature of the diesel gas and of the adsorbent falls markedly, this temperature drop being sufficient to cool the interior of the container.

Preferably the vessel is formed of a material having high thermal conductivity, which is in direct thermal contact with the adsorbent material, aluminium or aluminium alloy being a suitable material for the vessel.

The vessel is preferably configured so as to have a high surface area relative to its volume, so as to maximise convective and/or conductive heating within the container. The vessel may suitably comprise a thin, flat panel, which may form a substantial part of the interior ceiling, floor and/or wall of the container, and the surface of the container may be corrugated or dimpled so as to increase its surface area.

The vessel may comprise internal structural reinforcing members, so as to provide mechanical strength to the vessel and to prevent it from becoming damaged in use. These members may be a lattice or honeycomb structure, as are well known in the art, and/or they may be formed in a foam structure - foam metal structures having a continuously connected, open celled (reticulated) geometry being well known and used in industry in, for example, energy/impact adsorbers, heat exchangers and lightweight composite panels. Preferably the members are formed of a material having a high thermal conductivity and are in direct thermal contact with the adsorbent material, so as to optimise heat transfer between the adsorbent and the outer walls of the container.

A suitable gas is carbon dioxide and a suitable adsorbent material is activated carbon.

The compressed gas source may comprise a storage tank or cylinder located externally of the container, and heat exchange means may be provided between the storage tank or vessel and ambient air so as to facilitate heat transfer between ambient air and the cylinder and its contents, which would otherwise suffer a drop in temperature as the gas pressure reduces on flowing from the cylinder into the vessel.

The control means may comprise a thermostatic valve responsive to the temperature within the container to allow or prevent a flow of gas from the source to the vessel, so as to provide the required heating whenever necessary. The control means may also comprise means to vent gas from the vessel to atmosphere (either internally or externally of the container) so as to provide supplementary refrigeration utilising the endothermic nature of the desorption reaction as gas desorbs from the adsorbent material within the vessel, the system being arranged so as automatically to provide heating or refrigeration between threshold temperatures, which can be set according to the produce in the container, or the ambient temperature range, for example.

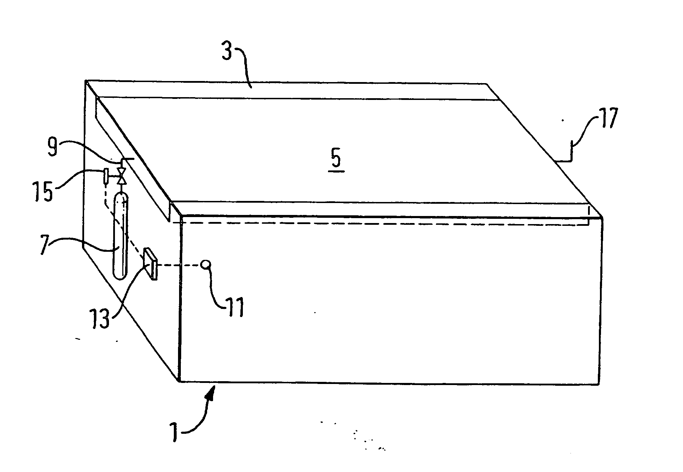

The invention will now be described by way of example and with reference to the accompanying drawing, which is a schematic view of a transportable refrigerated ISO container, or "reefer", provided with an apparatus in accordance with the invention.

The refrigerated container 1 illustrated has a ceiling 3 to which is mounted a large, flat vessel 5 containing an activated carbon adsorbent material (not shown) in an arrangement which is well known in the art. Mounted to the outside of container 1 is a cylinder 7 containing compressed carbon dioxide and in fluid communication with vessel 5 by pipeline 9. Mounted within the container is a temperature sensor 11 which is linked to a control unit 13 (such as a suitably programmed microprocessor) which controls a flow of compressed carbon dioxide from cylinder 7 to vessel 5 by way of control valve 15. Control unit 13 is effective to open valve 15 and permit carbon dioxide to flow from cylinder 7 into vessel 5 when heating of the interior of the container is required. This carbon dioxide is adsorbed by the activated carbon in an exothermic reaction, which reaction warms the adsorbent material and the walls of vessel 5, thus warming the interior of container 1 by conduction and/or convection with the atmosphere within the container. The control unit 13 controls the gas flow rate through valve 15 so that the required temperature within the container 1 can be maintained. Typically 140 kg of carbon dioxide will provide over 2.5 kWh of heat as a result of the adsorption process. This heat of adsorption can be utilised until the vessel reaches its pressure limit.

In order to maximise the heating available, the vessel 5 is provided with internal reinforcing members (not shown) which provide additional mechanical strength and can simultaneously facilitate heat transfer to and from the adsorbent material. The vessel 5 and any structural reinforcing members are formed of aluminium, or aluminium alloy which has a relatively high thermal conductivity so as to optimise heat transfer.

The vessel 5 is also provided with a vent 17 which can be opened and closed by control means 13 whenever additional refrigeration of the interior of container 1 is required. When vent 17 is open (valve 15 normally being closed) carbon dioxide is desorbed from the adsorbent material within vessel 5 in an endothermic reaction so as to provide additional refrigeration within the container 1, by conduction and/or convection.

Having described one embodiment of the invention, those skilled in the art will appreciate that there are various simple modifications possible. For example, the vent may be adapted so as to release cold gas from the vessel 5 into the container 1, thus increasing the refrigeration effect. Although shown as being mounted to the ceiling 3 of container 1, vessel 5 may additionally or alternatively extend over any of the walls and/or floor of the container 1, it being sufficient that the vessel 5 has a large surface area relative to the volume of vessel 5, which area is in contact with the atmosphere within the container 1 and/or with the produce inside the container. More complicated systems are easily envisaged for automatically cycling the adsorption and desorption modes of operation, which could include recovery and recompression of the carbon dioxide (although such systems would require an external power source), with a simple control panel being provided for manually setting those internal temperatures at which the system initiates heating or additional refrigeration.

## Claims

1. Apparatus for heating a refrigerated container (1) comprising a source (7) of a compressed gas, a vessel (5) in thermal communication with the interior of the container (1), and control means (11, 13, 15) to allow gas to flow from the source (7) to the vessel (5) when heating of the container (1) is desired, **characterised in that** the vessel (5) contains an adsorbent material to adsorb exothermically the flow of gas.

2. Apparatus according to Claim 1 wherein the vessel is formed of a material having high thermal conductivity in direct thermal contact with the adsorbent material.

3. Apparatus according to Claim 1 or Claim 2 wherein the vessel (5) comprises internal structural reinforcing members.

4. Apparatus according to Claim 3 wherein the members are formed of a material having a high thermal conductivity in direct thermal contact with the adsorbent material.

5. Apparatus according to any preceding claim wherein the gas comprises carbon dioxide and the adsorbent material comprises activated carbon.

6. Apparatus according to any preceding claim wherein the compressed gas source (7) comprises a storage tank or cylinder (7) located externally of the container (1), heat exchange means being provided between the storage tank or vessel and ambient air.

7. Apparatus according to any preceding claim wherein the control means (11, 13, 15) comprises a thermostatic valve (15) responsive to the temperature within the container (1) to allow or to prevent a flow of gas from the source (7) to the vessel (5).

8. Apparatus according to any preceding claim comprising means (17) to vent gas from the vessel (15) to atmosphere and/or into the container.

## Patentansprüche

1. Gerät zum Erwärmen eines gekühlten Behälters (1), mit einer Druckgasquelle (7), einem in thermischer Verbindung mit dem Inneren des Behälters (1) stehenden Gefäß (5), und Steuermitteln (11, 13, 15), um Gas aus der Quelle (7) in das Gefäß (5) strömen zu lassen, wenn ein Erwärmen des Behälters (1) gewünscht wird, **dadurch gekennzeichnet, dass** das Gefäß (5) ein Adsorptionsmittelmaterial zum exothermen Adsorbieren der Gasströmung enthält.

2. Gerät nach Anspruch 1, wobei das Gefäß aus einem Material mit hoher Wärmeleitfähigkeit gebildet ist, das in direktem Wärmekontakt mit dem Adsorptionsmittelmaterial steht.

3. Gerät nach Anspruch 1 oder Anspruch 2, wobei das Gefäß (5) innere mechanische Verstärkungsglieder aufweist.

4. Gerät nach Anspruch 3, wobei die Glieder aus einem Material mit hoher Wärmeleitfähigkeit bestehen und in direktem Wärmekontakt mit dem Adsorptionsmittelmaterial stehen.

5. Gerät nach einem der vorhergehenden Ansprüche, wobei das Gas Kohlendioxid ist und das Adsorptionsmittelmaterial Aktivkohle ist.

6. Gerät nach einen der vorhergehenden Ansprüche, wobei die Druckgasquelle (7) ein Speichertank oder eine Flasche (7) ist, die außerhalb des Behälters (1) angeordnet ist, wobei Wärmeaustauschmittel zwischen dem Speichertank oder Gefäß und der Umgebungsluft vorgesehen sind.

7. Gerät nach einen der vorhergehenden Ansprüche, wobei die Steuermittel (11, 13, 15) ein thermostatisches Ventil (15) umfassen, die auf die Temperatur im Behälter (1) ansprechen, um eine Gasströmung aus der Quelle (7) zum Gefäß (5) zu erlauben oder zu verhindern.

8. Gerät nach einen der vorhergehenden Ansprüche, mit Mitteln (17) zum Entlüften von Gas aus dem Gefäß (15) in die Atmosphäre und/oder in den Behälter.

## Revendications

1. Dispositif de chauffage d'un conteneur réfrigéré (1) comprenant une source (7) d'un gaz comprimé, une enceinte (5) en communication thermique avec l'intérieur du conteneur (1), et des moyens de commande (11, 13, 15) pour permettre au gaz de s'écouler de la source (7) jusqu'à l'enceinte (5) lorsque le chauffage du conteneur (1) est désiré, ***caractérisé en ce que*** l'enceinte (5) contient un matériau adsorbant pour adsorber de manière exothermique le flux de gaz.

2. Dispositif selon la revendication 1, dans lequel l'enceinte est formée d'un matériau ayant une conductivité thermique élevée, en contact thermique direct avec le matériau adsorbant.

3. Dispositif selon la revendication 1 ou la revendication 2, dans lequel l'enceinte (5) comprend des éléments de renfort de structure internes.

4. Dispositif selon la revendication 3, dans lequel les éléments sont formés d'un matériau ayant une conductivité thermique élevée, en contact thermique direct avec le matériau adsorbant.

5. Dispositif selon l'une quelconque des revendications précédentes, dans lequel le gaz comprend du dioxyde de carbone et le matériau adsorbant comprend du charbon actif.

6. Dispositif selon l'une quelconque des revendications précédentes, dans lequel la source (7) de gaz comprimé comprend un réservoir de stockage ou un cylindre (7) situé à l'extérieur du conteneur (1), des moyens d'échange de chaleur étant prévus entre le réservoir de stockage ou l'enceinte et l'air ambiant.

7. Dispositif selon l'une quelconque des revendications précédentes, dans lequel les moyens de commande (11, 13, 15) comprennent une vanne thermostatique (15) répondant à la température régnant dans le conteneur (1) pour permettre ou empêcher l'écoulement de gaz de la source (7) à l'enceinte (5).

8. Dispositif selon l'une quelconque des revendications précédentes, comprenant des moyens (17) pour évacuer le gaz de l'enceinte (5) vers l'atmosphère et/ou l'intérieur du conteneur.
